# EUROPEAN PATENT SPECIFICATION

(11) **EP 2 211 409 B1**
(45) Date of publication and mention of the grant of the patent: **20.11.2013**
(21) Application number: 08830320.1
(22) Date of filing: 10.09.2008
(51) Int. Cl.: H01M 8/04, H01M 8/10

(54) **FUEL CELL SYSTEM**
BRENNSTOFFZELLENSYSTEM
SYSTÈME DE PILE À COMBUSTIBLE

(30) Priority: 13.09.2007 JP 2007238393
(43) Date of publication of application: 28.07.2010
(73) Proprietor: JX Nippon Oil & Energy Corporation, Chiyoda-ku Tokyo 100-8162 (JP)
(72) Inventor: AKIMOTO, Jun, Yokohama-shi Kanagawa 231-0815 (JP); FUKUNAGA, Akihiko, Tokyo 105-8412 (JP); OKAWA, Tetsuo, Yokohama-shi Kanagawa 231-0815 (JP); IBUKA, Takeshi, Yokohama-shi Kanagawa 231-0815 (JP); HIWATARI, Manabu, Yokohama-shi Kanagawa 231-0815 (JP); SAKIMA, Shuhei, Yokohama-shi Kanagawa 231-0815 (JP); HORI, Yoshihiro, Ohta-ku, Tokyo 144-8510 (JP); ASAI, Shigeru, Ohta-ku, Tokyo 144-8510 (JP); YAMAGUCHI, Yasuyoshi, Ohta-ku, Tokyo 144-8510 (JP); TSUDA, Katsumi, Ohta-ku, Tokyo 144-8510 (JP); MIDORIKAWA, Yoichi, Ohta-ku, Tokyo 144-8510 (JP); MASUYAMA, Takuya, Ohta-ku, Tokyo 144-8510 (JP)
(74) Representative: Müller-Boré & Partner Patentanwälte
(86) International application number: PCT/JP2008/066328
(87) International publication number: WO 2009/034997

(56) References cited:
- JP-A- 06 076 852
- JP-A- 06 150 955
- JP-A- 63 091 967
- JP-A- 63 091 967
- JP-A- 2002 015 761
- JP-A- 2006 286 486
- JP-A- 2006 286 486
- JP-A- 2006 338 974
- JP-A- 2006 500 733
- JP-A- 2007 073 282
- JP-A- 2007 080 767
- US-A1- 2003 162 063

## Description

### Technical Field

The present invention relates to a fuel cell system for use in cold regions in particular.

### Background Art

Known as a conventional fuel cell system is one including a reforming section which reforms liquid hydrocarbon in order to generate hydrogen, a fuel cell stack for generating power by an electrochemical reaction between oxygen and hydrogen, and the like (see, for example, Patent Literature 1).
Patent Literature 1: Japanese Patent Application Laid-Open No. 2007-70502

### Disclosure of Invention

### Technical Problem

The above-mentioned fuel cell system reforms liquid hydrocarbon in the reforming section together with water, produces water when generating power in the fuel cell stack, and cools generated heat by circulating cooling water. The fuel cell system contains water in its piping, cell stack, and the like as in the foregoing and thus may leave such water (within the cell stack in particular) to freeze when installed in places where temperature is low, which makes it unsuitable for use in cold regions and the like.

For overcoming such a problem, it is an object of the present invention to provide a highly safe fuel cell system which prevents devices within the system from freezing and can be employed in cold regions and the like.

### Solution to Problem

The fuel cell system in accordance with the present invention is a fuel cell system including a cell stack in an inner space of a housing; the fuel cell system comprising heating means, arranged in the inner space, for heating the inner space; wherein the heating means is placed on a bottom face side of the inner space of the housing, while a gap is provided between the bottom face and the heating means; wherein a mounting board for mounting an inner device including the cell stack is provided in the inner space of the housing; and wherein the heating means is arranged between the mounting board and the bottom face of the inner space of the housing.

This fuel cell system can heat the inner space of the housing with the heating means and thus can prevent devices within the system from freezing, so as to be employable in cold regions and the like. Since a gap is provided between the heating means and the bottom face, water, fuel, and the like which may leak from within the system and accumulate on the bottom face of the housing, if any, can be prevented from causing short circuits and ground leakage, so as to enhance safety. Arranging the heating means on the bottom face side of the housing allows the heat from the heating means to convect naturally throughout the inner space of the housing, so as to improve efficiency in heating. The heating means and an inner device such as the cell stack are shielded from each other by the mounting board and thus can be prevented from coming into direct contact with each other, whereby the safety can further be enhanced.

In the fuel cell system in accordance with the present invention, the mounting board may be provided with a plurality of through holes. This can promote the natural convection of heat from the heating means, so as to heat the inner space of the housing efficiently. It can also prevent liquids such as water from accumulating on the mounting board.

The fuel cell system in accordance with the present invention may further comprise temperature detection means, arranged about the cell stack, for detecting an ambient temperature of the cell stack; and temperature control means for controlling the heating means according to the temperature detected by the temperature detection means such that the ambient temperature is kept at a temperature where water freezes or higher. This allows the temperature detection means to detect the ambient temperature of the cell stack that is a component which is highly likely to freeze within the system in particular, and the temperature control means to control the heating means according to the detection, so as to heat the inner space of the housing with the heating means and keep the ambient temperature of the cell stack at a temperature where no freezing can occur or higher. Since heat is produced within the system during its operation, components within the system such as the cell stack are less likely to freeze during the operation but more likely to freeze when the system is not operating. This fuel cell system has the temperature detection means arranged about the cell stack and thus can sensitively respond to operating states of the system. Therefore, the heating means can be actuated only when there is a possibility of freezing, e.g., when the system is not operating, whereby power can be kept from being wasted.

### Advantageous Effects of Invention

The present invention can provide a highly safe fuel cell system which prevents devices within the system from freezing and can be employed in cold regions and the like.

### Brief Description of Drawings

**[****Fig. 1]** Fig. 1 is a schematic diagram illustrating the fuel cell system in accordance with an embodiment of the present invention;
**[****Fig. 2]** Fig. 2 is a schematic diagram illustrating arrangements of components within the housing in the fuel cell system of Fig. 1;
**[****Fig. 3]** Fig. 3 is a front view of a mounting plate illustrated in Fig. 2;
**[****Fig. 4]** Fig. 4 is a front view of a sheathed heater illustrated in Fig. 2;
**[****Fig. 5]** Fig. 5 is a sectional view taken along the line V-V of Fig. 4;
**[****Fig. 6]** Fig. 6 is a flowchart illustrating a processing procedure in a controller; and
**[****Fig. 7]** Fig. 7 is a front view of the mounting plate in accordance with another embodiment.

### Reference Signs List

- 1: fuel cell system
- 4: PEFC stack (cell stack)
- 6: housing
- 6a: lid
- 6c: upper face (bottom face)
- 11: controller (temperature control means)
- 12, 22: mounting plate (mounting board)
- 13: sheathed heater (heating means)
- 14: temperature sensor (temperature detection means)
- 18: gap
- S: inner space

### Description of Embodiments

In the following, preferred embodiments of the present invention will be explained in detail with reference to the accompanying drawings. In the explanation of the drawings, the same or equivalent constituents will be referred to with the same signs while omitting their overlapping descriptions.

### Example 1

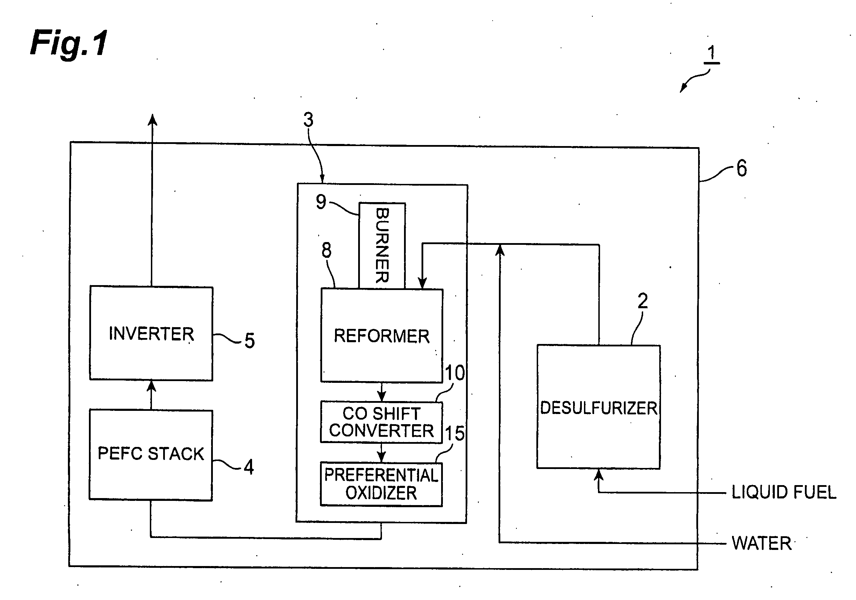

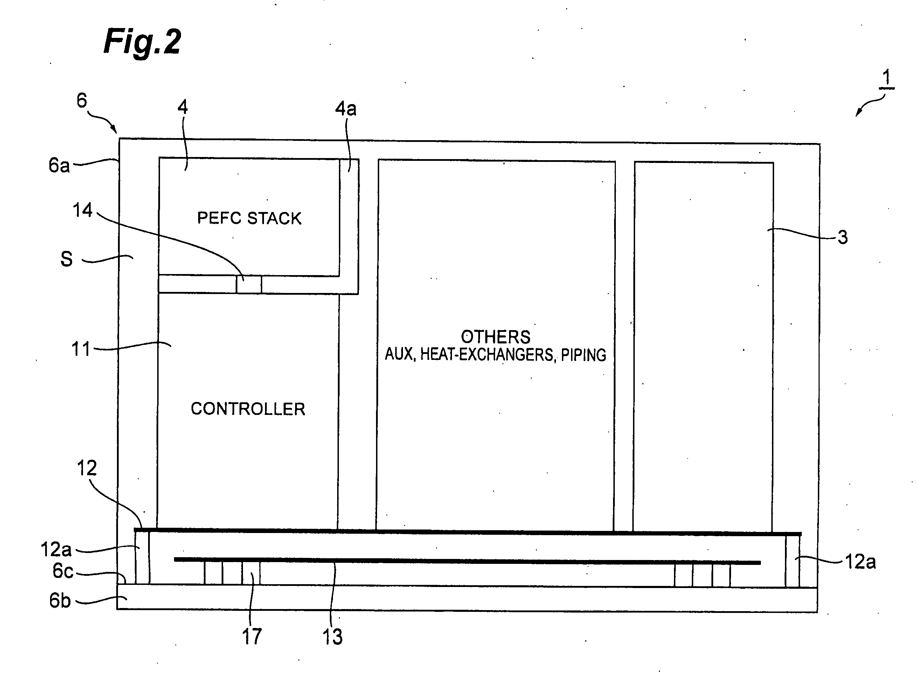

Fig. 1 is a schematic diagram illustrating the fuel cell system in accordance with an embodiment of the present invention, while Fig. 2 is a schematic diagram illustrating arrangements of components within the housing in the fuel cell system of Fig. 1. The fuel cell system, which generates power by using a material for producing hydrogen, is employed as a power supply source for household use, for example. As the hydrogen-producing material, any substance is usable here as long as it can yield a reformed gas containing hydrogen by a steam reforming reaction. For example, compounds having carbon and hydrogen in their molecules, such as hydrocarbons, alcohols, and ethers, can be used. Preferred examples of the hydrogen-producing material which are available for industrial or consumer use include not only methanol, ethanol, dimethyl ether, methane, city gases, and LPG (liquefied petroleum gas), but also hydrocarbon oils such as gasoline, naphtha, kerosene, and gas oil which are obtained from petroleum. Liquid fuels are preferred among them; kerosene is preferred in particular since it is easily available for both industrial and consumer uses while being easy to handle.

As illustrated in Fig. 1, this fuel cell system 1 comprises a desulfurizer 2, a fuel processing system (FPS) 3, a polymer electrolyte fuel cell (PEFC) stack 4, an inverter 5, and a housing 6 which accommodates them.

The desulfurizer 2 desulfurizes a hydrogen-producing material introduced from the outside. The desulfurizer 2 is provided with a heater (not depicted) and thus is adapted to heat the hydrogen-producing material to a temperature of 130°C to 140°C, for example.

The FPS 3 is used for generating a reformed gas by reforming the hydrogen-producing material and has a reformer 8, a burner 9, a CO shift converter 10, and a preferential oxidizer 15. The reformer 8 is fed with the desulfurized hydrogen-producing material from the desulfurizer 2 and steam (water) from the outside. The desulfurized hydrogen-producing material and steam (water) undergo a steam reforming reaction in the presence of a reforming catalyst, thereby producing a reformed gas which contains hydrogen.

The burner 9 heats the reforming catalyst of the reformer 8, thereby supplying an amount of heat necessary for the steam reforming reaction. Preferably used as fuels for the burner 9 are the hydrogen-producing material from the desulfurizer 2 at the time of starting the system and off-gases from the PEFC stack 4 during the operation.

The CO shift converter 10 is used for causing carbon monoxide to react with water and converting them into hydrogen and carbon dioxide by a hydrogen shift reaction in order to lower the concentration of carbon monoxide contained in the reformed gas produced by the reformer 8. The preferential oxidizer 15 is used for preferentialy oxidizing carbon monoxide in the reformed gas so as to turn it into carbon dioxide in order to further lower the concentration of carbon monoxide in the reformed gas processed by the CO shift converter 10.

The PEFC stack (cell stack) 4, which is constructed by stacking a plurality of cells (not depicted), generates power by using the reformed gas obtained by the FPS 3 and outputs a direct current (DC). Each cell has an anode, a cathode, and an electrolyte which is a solid polymer arranged between the anode and cathode, and performs an electrochemical power generating reaction when the reformed gas and air are introduced into the anode and cathode, respectively.

The inverter 5 transforms the outputted DC into an alternate current (AC). The housing 6 accommodates therewithin the desulfurizer 2, FPS 3, PEFC stack 4, and inverter 5 as modules. The housing 6 is constructed by covering a base 6b with a lid 6a and has an inner space S.

In the inner space S of the housing 6, as illustrated in Fig. 2, a mounting plate (mounting board) 12 is placed so as to cover the upper face (bottom face) 6c of the base 6b as a whole, while the FPS 3, the PEFC stack 4, a controller (temperature control means) 11, and other inner devices such as auxiliaries, heat-exchangers, and piping of the fuel cell system 1 are mounted on the mounting plate 12. The mounting plate 12 is supported by legs 12a on the base 6b so as to be separated from the latter, thus yielding a so-called double bottom structure. A sheathed heater (heating means) 13 for heating the inner space S of the housing 6 is arranged between the mounting plate 12 and the base 6b. A gap is provided between an outer edge portion of the mounting plate 12 and the lid 6a of the housing 6, so as to prevent heat from transferring from the mounting plate 12 through the lid 6a to the outside. Through this gap, the heat from the sheathed heater 13 flows upward by a natural convection.

The PEFC stack 4 is arranged above the controller 11 and has a temperature sensor (temperature detection means) 14 attached thereto through a heat insulator 4a. The temperature sensor 14 detects an ambient temperature of the PEFC stack 4.

The controller 11 is equipped with a temperature controlling function for detecting the temperature of the inner space S of the housing 6 and controlling the sheathed heater 13. Specifically, in terms of cost, it will be preferred if the temperature controlling function is materialized by a bimetallic thermostat. The controller 11 also functions to control the whole fuel cell system 1 together with the temperature control.

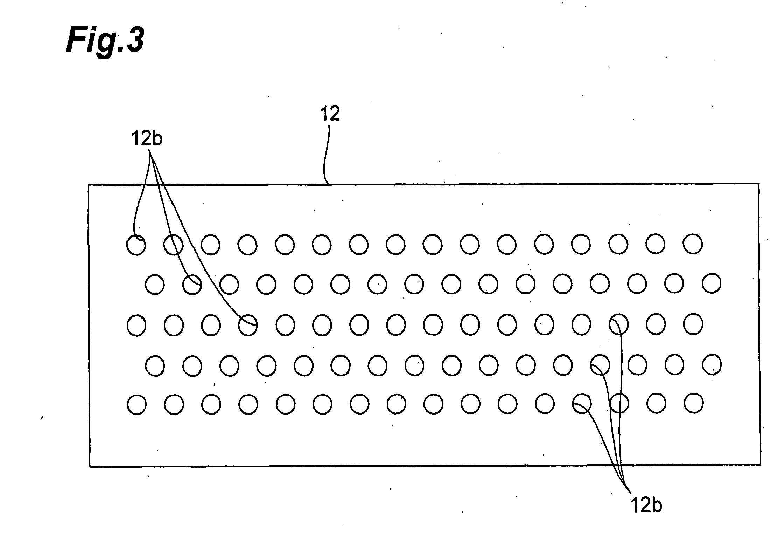

Preferably, as illustrated in Fig. 3, the mounting plate 12 is a rectangular board material formed with a plurality of regularly arranged through holes 12b having the same diameter. This allows the heat from the sheathed heater 13 arranged therebelow to pass through the through holes 12b, so as to convect naturally upward, whereby the inner space S can be heated efficiently. It can also prevent liquids such as water from accumulating on the mounting plate 12.

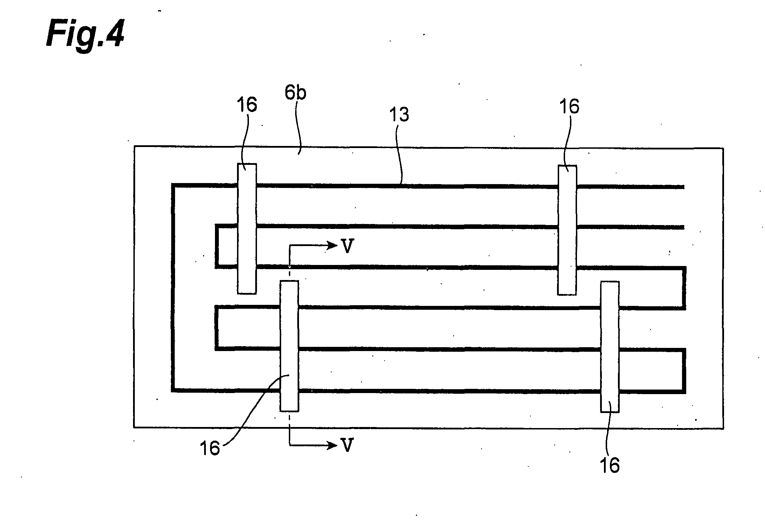

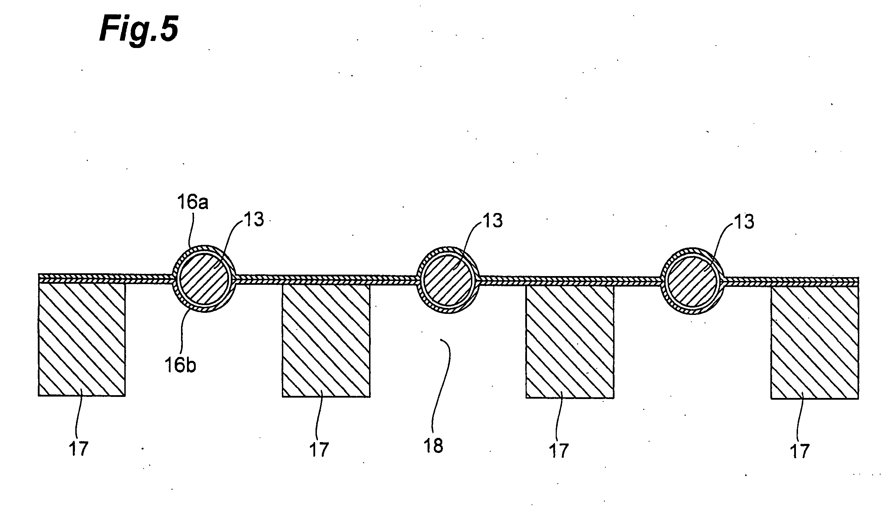

As illustrated in Fig. 4, the sheathed heater 13 is constructed by laying a single heating wire all over the base 6b and securing it with securing devices 16. In view of the ignition temperature of kerosene to be used as the hydrogen-producing material, upper temperature limits for electronic components in the system, and the like, the ambient temperature at the time when the sheathed heater 13 generates heat is set to 50 to 100°C, preferably about 60°C, while taking account of curing. As illustrated in Fig. 5, the sheathed heater 13 is secured by being held between securing devices 16a, 16b from the upper and lower sides and is supported by legs 17, whereby a gap 18 is provided between the sheathed heater 13 and the base 6b.

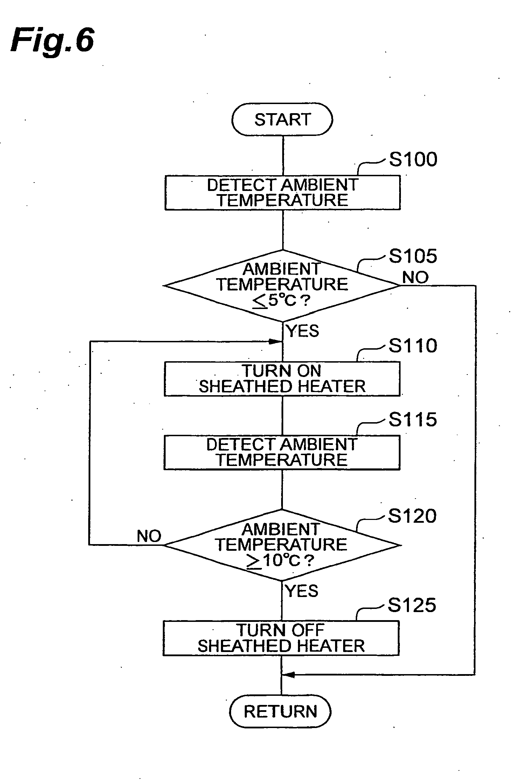

A controlling method in the controller 11 will now be explained with reference to Fig. 6.

First, the temperature sensor 14 detects an ambient temperature of the PEFC stack 4 (S100). When a temperature of 5°C or higher is detected in the inner space S at this time because of the heat generated from components in the system as in the case where the fuel cell system 1 is in an operating state, the ambient temperature is kept being detected without switching the ON/OFF of the sheathed heater 13. When the temperature of the inner space S drops, as in the case where the fuel cell system 1 is in an operation stop state, such that the temperature sensor 14 detects that the ambient temperature of the PEFC stack 4 is 5°C or lower (S105), on the other hand, the controller 11 turns on the sheathed heater 13 (S110), thereby heating the inner space S. Then, the temperature sensor 14 detects the temperature again (S 115). When the temperature of the inner space S is raised by the heat from the sheathed heater 13 such that the temperature sensor 14 detects that the ambient temperature of the PEFC stack 4 is 10°C or higher (S120), the controller 11 turns off the sheathed heater 13 (S125), whereby the heating is stopped. When it is detected at S120 that the ambient temperature does not exceed 10°C, on the other hand, the ON state of the sheathed heater 13 is kept. Such control keeps the current state, regardless of whether the sheathed heater 13 is ON or OFF, when the ambient temperature of the PEFC stack 4 is 5°C to 10°C. Thus imparting a hysteresis to temperature reduces useless repeated ON/OFF actions of the sheathed heater 13. Here, the sheathed heater 13 is turned on at a temperature of 5°C or higher in order to keep the ambient temperature of the PEFC stack 4 at a temperature where water freezes or higher.

The foregoing allows the temperature sensor 14 to detect the ambient temperature of the PEFC stack 4 that is a component which is highly likely to freeze within the system in particular, and the controller 11 to control the sheathed heater 13 according to the detection, so as to heat the inner space S of the housing 6 and keep the ambient temperature of the PEFC stack 4 at a temperature where no freezing can occur or higher. This can prevent at least the PEFC stack 4, which is highly likely to freeze among components within the system, from freezing and make it employable in cold regions and the like.

Since heat is produced within the system during its operation, components within the system such as the PEFC stack 4 are less likely to freeze during the operation but more likely to freeze when the system is not operating. In particular, since the PEFC stack 4 is more likely to freeze than the other components and influential on performances when frozen, it is necessary to prevent the PEFC stack 4 from freezing. Depending on where the temperature sensor 14 is arranged, however, the sheathed heater 13 may be actuated even when there is no possibility of the PEFC stack 4 freezing, e.g., during the operation of the system, whereby power may be wasted. Since the temperature sensor is arranged about the PEFC stack 4, this fuel cell system 1 has a structure which can sensitively respond to operating states of the system. Therefore, the sheathed heater 13 can be actuated only when there is a possibility of freezing, e.g., when the system is not operating, whereby power can be kept from being wasted.

Since the gap 18 is provided between the sheathed heater 13 and the base 6b, water, a liquid-based hydrogen-producing material, and the like which may leak from within the system and accumulate on the bottom face of the housing, if any, can be prevented from causing short circuits and ground faults, so as to enhance safety. Arranging the sheathed heater 13 in the lower part of the inner space S allows the heat from the sheathed heater 13 to convect naturally throughout the inner space S of the housing 6, so as to improve efficiency in heating.

The sheathed heater 13 and the PEFC stack 4 are shielded from each other by the mounting plate 12 and thus can be prevented from coming into direct contact with each other, whereby the safety can further be enhanced. Arranging the sheathed heater 13 below the mounting plate 12 can efficiently utilize the space, thereby making the apparatus compact.

The present invention is not limited to the embodiment mentioned above.

For example, the temperature sensor 14 may be arranged anywhere about the PEFC stack 4.

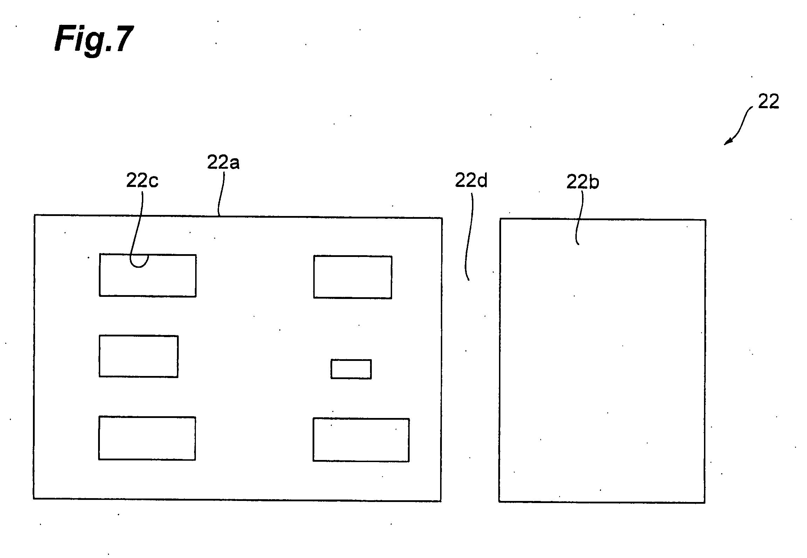

Though one provided with a plurality of through holes 12b is employed as the mounting plate 12, it may be a mounting plate 22 illustrated in Fig. 7, which is divided into plates 22a, 22b and provided with through holes 22c corresponding to arrangements of components to be supported. This allows heat to pass through a gap 22d between the plates 22a, 22b and the through holes 22c efficiently in conformity with arrangements of components.

The stack is not limited to the PEFC stack, but may be of other types such as those in forms of alkaline electrolytes, phosphates, molten carbonates, and solid oxides.

Without being restricted to 5°C to 10°C, the ON/OFF temperature for the sheathed heater 13 may be other thresholds T₁, T₂ as long as the ambient temperature of the PEFC stack 4 can be kept at a temperature where water does not freeze.

Not only the sheathed heater, but cartridge heaters, tube heaters, hose heaters, ceramic heaters, plate heaters (space heaters), and the like may also be used as the heating means.

### Industrial Applicability

The present invention is applicable to a highly safe fuel cell system which prevents devices within the system from freezing and can be employed in cold regions and the like.

## Claims

1. A fuel cell system including a cell stack in an inner space of a housing;
the fuel cell system comprising heating means, arranged in the inner space, for heating the inner space;
wherein the heating means is placed on a bottom face side of the inner space of the housing, while a gap is provided between the bottom face and the heating means;
wherein a mounting board for mounting an inner device including the cell stack is provided in the inner space of the housing; and
wherein the heating means is arranged between the mounting board and the bottom face of the inner space of the housing.

2. A fuel cell system according to claim 1, wherein the mounting board is provided with a plurality of through holes.

3. A fuel cell system according to claim 1 or 2, further comprising:
temperature detection means, arranged about the cell stack, for detecting an ambient temperature of the cell stack; and
temperature control means for controlling the heating means according to the temperature detected by the temperature detection means such that the ambient temperature is kept at a temperature where water freezes or higher.

## Patentansprüche

1. Brennstoffzellensystem, welches einen Zellenstapel in einem inneren Bereich eines Gehäuses einschließt,
wobei das Brennstoffzellensystem eine in dem inneren Bereich angeordnete Heizvorrichtung für das Erwärmen des inneren Bereichs umfasst,
wobei die Heizvorrichtung auf einer Bodenfläche des inneren Bereichs des Gehäuses angeordnet ist, wobei zwischen der Bodenfläche und der Heizvorrichtung ein Spalt bereitgestellt ist,
wobei eine Montageplatte für das Montieren einer inneren Vorrichtung, welche den Zellenstapel einschließt, im inneren Bereich des Gehäuses bereitgestellt ist, und
wobei die Heizvorrichtung zwischen der Montageplatte und der Bodenplatte des inneren Bereichs des Gehäuses angeordnet ist.

2. Brennstoffzellensystem nach Anspruch 1, wobei die Montageplatte mit einer Mehrzahl von Durchgangslöchern versehen ist.

3. Brennstoffzellensystem nach Anspruch 1 oder 2, weiter umfassend eine Vorrichtung zur Temperaturmessung, die an dem bzw. um den Zellenstapel angeordnet ist, für das Messen einer Umgebungstemperatur des Zellenstapels und
eine Vorrichtung zur Temperaturregelung zum Regeln der Heizvorrichtung entsprechend der von der Vorrichtung zur Temperaturmessung gemessenen Temperatur, so dass die Umgebungstemperatur bei einer Temperatur, bei der Wasser gefriert, oder höher gehalten wird.

## Revendications

1. Un système de pile à combustible comprenant un empilage de pile dans l'espace intérieur d'un boîtier ;
le système de pile à combustible comprenant un moyen de chauffage disposé dans l'espace intérieur pour chauffer l'espace intérieur ;
dans lequel le moyen de chauffage est placé sur une paroi inférieure de l'espace intérieur du boîtier, et un espace est présent entre la paroi inférieure et le moyen de chauffage ;
dans lequel une plaque de montage pour monter un dispositif interne comprenant l'empilage de pile est présent dans l'espace intérieur du boîtier ; et
dans lequel le moyen de chauffage est disposé entre la plaque de montage et la paroi inférieure de l'espace intérieur du boîtier.

2. Un système de pile à combustible selon la revendication 1, dans lequel la plaque de montage comprend une pluralité de trous de passage.

3. Un système de pile à combustible selon la revendication 1 ou 2, comprenant en outre: un moyen de détection de la température disposé autour de l'empilage de pile pour détecter une température ambiante de l'empilage de pile ; et
un moyen de contrôle de température pour contrôler le moyen de chauffage en fonction de la température détectée par le moyen de détection de la température tel que la température ambiante est maintenue à une température où l'eau gèle ou à une température plus élevée.
